# EUROPEAN PATENT SPECIFICATION

(11) **EP 3 433 187 B1**
(45) Date of publication and mention of the grant of the patent: **14.09.2022**
(21) Application number: 17722863.2
(22) Date of filing: 23.03.2017
(51) Int. Cl.: B65D 85/804

(54) **CAPSULE FOR INFUSION PRODUCTS, IN PARTICULAR COFFEE**
KAPSEL FÜR INFUSIONEN, INSBESONDERE KAFFEE
CAPSULE POUR LES INFUSIONS, SPÉCIALEMENT LE CAFÉ

(30) Priority: 23.03.2016 IT UA20161940
(43) Date of publication of application: 30.01.2019
(73) Proprietor: Macchiavelli S.r.l., 40138 Bologna (IT)
(72) Inventor: RONDELLI, Raffaele, 40050 Argelato (Bologna) (IT)
(74) Representative: Mangini, Simone
(86) International application number: PCT/IB2017/051693
(87) International publication number: WO 2017/163210

(56) References cited:
- WO-A1-2005/018395
- WO-A1-2013/053655
- WO-A1-2014/037339
- WO-A1-2014/195307
- WO-A1-2015/011689
- WO-A2-2006/021405
- WO-A2-2012/055751

## Description

The present invention relates to a capsule for infusion products intended to be used in a machine for the extraction of beverages, as specified in the preamble of independent claim 1.

Although the invention will hereinafter be illustrated with specific reference to a coffee capsule, it is intended to be applicable in general to a capsule containing any other infusion product.

A capsule of the type identified above is known for example from WO 2014/037339. This known capsule comprises a generally frustoconical, cup-shaped body, with a larger base, or lid, through which pressurized hot water is introduced inside the capsule, and with a smaller base, or bottom wall, having an outlet opening through which the beverage flows out of the capsule to be collected in a container, for example a coffee cup. Inside the cup-shaped body a compartment adapted to contain the coffee is provided, which compartment is defined laterally by the cup-shaped body and inferiorly by an impermeable retaining wall. The retaining wall comprises a tearable aluminum membrane which is welded to the cup-shaped body so as to liquid- and air-tightly seal inferiorly the compartment containing the coffee. The retaining wall is spaced from the bottom wall of the capsule and between these walls is arranged a perforation plate adapted to pierce the aluminum membrane when the pressure inside the capsule increases.

To obtain the coffee/water infusion, the capsule is inserted into the percolation chamber of a coffee machine, where a certain amount of pressurized hot water is injected inside the cup-shaped body of the capsule through the lid and thereby mixes with the coffee. The entry of pressurized hot water causes an increase in pressure within the compartment containing the coffee and thus a deformation of the retaining wall towards the perforation plate. As a result of this deformation, the aluminum membrane of the retaining wall comes in contact with the perforating elements, such as points, of the perforation plate, until it tears. Alternatively, the aluminum membrane of the retaining wall may simply tear due to the increased pressure, even before coming into contact with the perforating elements of the perforation plate. The beverage may at this point flow out of the compartment through the passages made in the aluminum membrane as a result of tearing of the same and finally flow out of the capsule through the outlet opening provided in the bottom wall of the cup-shaped body.

It is an object of the present invention to provide an improved capsule with respect to the prior art discussed above, in particular a capsule which does not require a perforation plate for opening the retaining wall.

This and other objects are fully achieved according to the present invention by a capsule having the features specified in the appended independent claim 1.

Advantageous embodiments of the invention are defined in the dependent claims, the subject-matter of which is to be understood as forming an integral and integrating part of the present description.

In short, the invention is based on the idea of providing a capsule wherein below a retaining wall, which defines inferiorly the compartment containing the infusion product (hereinafter also referred to as "ingredient compartment") and which includes an impermeable layer firmly secured at a peripheral edge thereof to the cup-shaped body, an elastically deformable and perforated support disc is arranged, which disc is configured to flex towards the bottom wall of the capsule starting from an initial undeformed condition, as a result of the flexing of the impermeable layer when the pressure inside the compartment increases upon introduction of pressurized hot water. The support disc is deprived of perforating elements facing the overlying impermeable layer. Preferably, in the initial undeformed condition the support disc is in contact with the retaining wall. Furthermore, in the initial undeformed condition the support disc is arranged with only its peripheral edge resting on the bottom wall of the cup-shaped body of the capsule or on a suitable support surface placed at a distance from the bottom wall. Following the introduction of pressurized hot water inside the capsule, and thus the pressure increase inside the compartment containing the infusion product, the retaining wall deforms towards the bottom wall of the capsule, causing the support disc to also deform. At this stage, the support disc accompanies the deformation of the retaining wall, with the result that the impermeable layer is torn, due to the increased stress state to which it is subjected as a result of its deformation, not at the center but rather in the vicinity of its peripheral edge. This allows to obtain a better outflow of the beverage from the compartment and thus to improve the quality of the beverage produced. Furthermore, the tearing of the impermeable layer takes place without interaction with perforating elements, but rather only as a result of the deformation to which it is subjected as a result of the increased pressure inside the compartment containing the infusion product following the introduction of pressurized hot water inside the capsule.

The impermeable layer is made of a given material and/or has a given thickness, the material and/or the thickness being chosen in such a way as to ensure the tearing of the impermeable layer once a given pressure within the ingredient compartment is reached. The impermeable layer may for example be made of aluminum, with a thickness equal for example to 0.02 mm. Alternatively, or in addition, tearing of the impermeable layer of the retaining wall may be obtained by providing at least one specific tear point in this layer.

According to one embodiment, the support disc has, on its upper face, at least one labyrinth groove ending with a through hole. Alternatively, the support disc may have a plurality of through holes distributed over the entire support disc itself, or at least over a part thereof.

The capsule further comprises filtering means, which may be arranged above or below the impermeable layer, in contact with, or at a certain distance from, such layer. The filtering means may for example be arranged between the impermeable layer and the support disc or below the support disc, in contact with, or at a certain distance from, such disc.

Preferably, the filtering means are formed by a layer of filter paper. The filter paper layer may be arranged below the impermeable layer, for example firmly connected to the support disc, or above the impermeable layer, for example welded to a support surface formed by the cup-shaped body of the capsule.

The support disc may be made of plastic material or any other suitable material, such as for example filter paper.

In one embodiment of the invention, the lid of the capsule is impermeable, being for example formed by an aluminum foil. In this case, the capsule may further comprise an upper wall which defines superiorly the compartment containing the infusion product and is spaced from the lid so as to define with the latter an upper compartment. This upper wall has a plurality of holes and is formed for example by a microperforated film. The pressurized hot water is introduced into the upper compartment by a needle of the machine, after the same has perforated the lid, and from here is distributed in the compartment containing the infusion product, passing through the holes provided in the upper wall.

According to one variant of the invention, the lid of the capsule is permeable and the compartment containing the infusion product is directly closed by the lid, i.e. no upper compartment between the lid and the compartment containing the infusion product is provided. In this case, the pressurized hot water is injected directly into the compartment containing the infusion product through the holes provided in the lid. As in this case the lid is permeable, measures must naturally be taken to prevent the infusion product contained in the capsule from coming into contact with the air. In a per se known manner, the capsule may for example be inserted in a packaging of impermeable material, such as aluminum.

In one embodiment of the invention, the cup-shaped body of the capsule has in its lower area, in addition to the outlet opening, a lateral hole adapted to put the lower compartment of the capsule, i.e. the compartment provided between the retaining wall and the bottom wall, into communication with the external environment in order to maintain the pressure within such compartment equal to the external pressure.

Further features and advantages of the present invention will become more apparent from the following detailed description, given purely by way of non-limiting example with reference to the accompanying drawings, in which:
Figure 1 is an isometric view of a capsule for infusion products according to one embodiment of the present invention;
Figure 2 is an axial sectional view in of the capsule of Figure 1;
Figure 3 shows, on an enlarged scale, the detail A of Figure 2;
Figure 4 and Figure 5 are axial sectional views showing in detail a portion of the lower area of a capsule for infusion products according to a further embodiment of the present invention, respectively with the retaining wall in the initial undeformed condition and with the retaining wall in the deformed condition as a result of the introduction of pressurized hot water inside the capsule and the consequent increase in pressure inside the capsule;
Figure 6 shows a front exploded view of a further embodiment of the capsule; and
Figure 7 shows, on an enlarged scale, the support disc of the capsule of Figure 6.

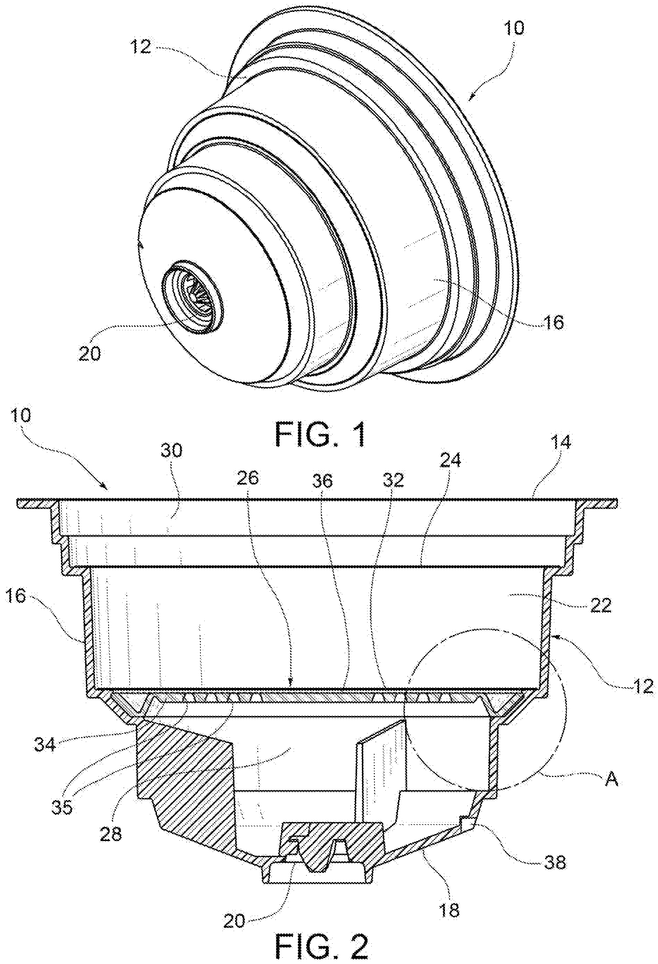

With reference first to Figures 1 and 2, a capsule for infusion products, such as for example coffee, according to an embodiment of the present invention is generally indicated 10. The capsule 10 comprises a cup-shaped body 12 and a lid 14 which closes superiorly the cup-shaped body 12. The cup-shaped body 12 comprises a side wall 16 and a bottom wall 18. The bottom wall 18 has at least one outlet opening 20, preferably in the central position, for allowing the beverage to flow out of the capsule. Preferably, the cup-shaped body 12 has a generally frustoconical shape, of which the bottom wall constitutes the smaller base, while the lid constitutes the larger base.

The infusion product (e.g. coffee) is contained in an intermediate compartment, or ingredient compartment, 22 enclosed laterally by the side wall 16 of the cup-shaped body 12, superiorly by a top wall 24 and inferiorly by a lower wall, or retaining wall, 26. The upper wall 24 may not be provided, in which case the ingredient compartment 22 is enclosed superiorly directly by the lid 14. The retaining wall 26 is spaced from the bottom wall 18 of the cup-shaped body 12 so as to define with the latter a lower compartment 28.

In the embodiment herein proposed the lid 14 is impermeable, as it is for example formed by an aluminum foil. Where provided, the upper wall 24 of the intermediate compartment 22 is spaced from the lid 14 so as to define with the latter an upper compartment 30. Furthermore, the upper wall 24 has a plurality of holes, as it is formed for example by a microperforated film, so as to allow a uniform distribution inside the intermediate compartment 22 of the pressurized hot water that is introduced into the upper compartment 30 by a needle of the machine after the needle has pierced the lid 14.

According to a variant of the invention, not shown, the lid is permeable, as it is for example formed by a microperforated film. In this case, the lid directly forms the upper wall of the ingredient compartment, and therefore there is no upper compartment between the lid and the ingredient compartment. The pressurized water is thus injected directly into the ingredient compartment through the holes provided in the lid. As in this case the lid is permeable, measures must naturally be taken to prevent the infusion product contained in the capsule from coming into contact with the air. In per se known manner, the capsule may for example be placed in a packaging of impermeable material, such as aluminum.

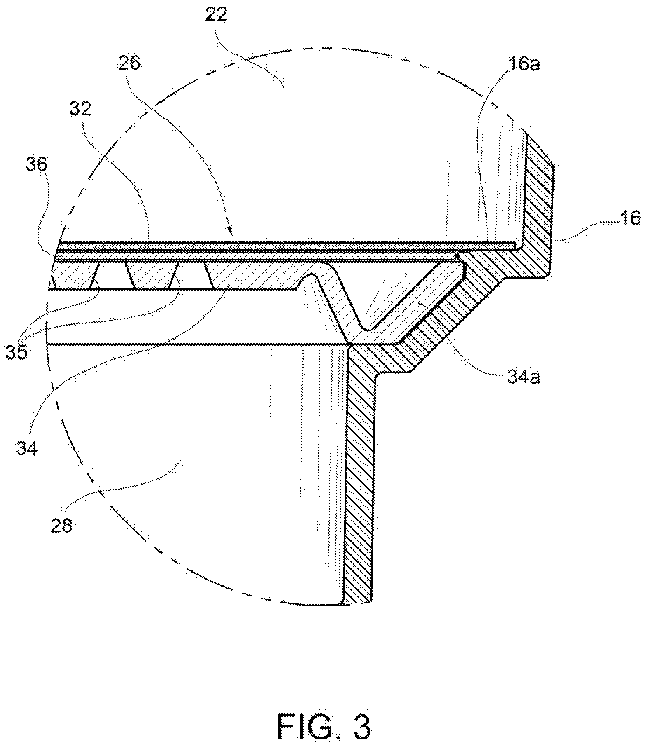

With reference also to Figure 3, the retaining wall 26 includes an impermeable layer 32, which is firmly connected to the side wall 16 of the cup-shaped body 12, for example on a horizontal flat surface 16a (Figure 3) of the side wall 16 acting as a shoulder, so as to liquid- and air-tightly seal inferiorly the ingredient compartment 22. The impermeable layer 32 is configured to tear autonomously, without interaction with perforating elements or like elements of the capsule, as a result of only the pressure reached within the ingredient compartment 22 upon introduction of pressurized hot water. The impermeable layer 32 is made for example of aluminum, with a thickness equal for example to 0.02 mm. Alternatively, the impermeable layer 32 may be made for example of plastic material. To facilitate the tearing of the impermeable layer 32 and/or to cause the tearing in one or more predetermined points, one or more tear points may be provided in this layer.

The capsule 10 further comprises an elastically deformable support disc 34 placed beneath the impermeable layer 32. The support disc 34 is restrained in the cup-shaped body 12, for example by means of interlocking coupling. In particular, the support disc 34 is arranged with only a peripheral edge 34a thereof (Figure 3) resting on a suitable support surface which is formed by the side wall 16 of the cup-shaped body 12 and is placed at a distance from the bottom wall 18, as in the embodiment of Figures 1 to 3, or directly on the bottom wall 18. Alternatively, the support disc 34 may be formed in one piece with the cup-shaped body 12. The support disc 34 is configured to flex elastically downwards, i.e. toward the bottom wall 18, as a result of the flexing of the impermeable layer 32, when the pressure inside the ingredient compartment 22 increases as a result of the introduction of pressurized hot water into the capsule, from an initial undeformed condition (shown in Figures 2 and 3) to a deformed condition. Moreover, the support disc 34 is perforated to allow the beverage to pass through the disc itself towards the lower compartment 28 and the outlet opening 20 as a result of the tearing of the impermeable layer 32. In this regard, in the embodiment of Figures 2 and 3 the support disc 34 has a plurality of holes 35 distributed over part of the support disc itself, but alternatively the holes may also be distributed over the entire support disc. The support disc 34 is also deprived of perforating elements facing towards the overlying impermeable layer 32.

The support disc 34 is preferably made of plastic material, but may also be made of another suitable material, for example filter paper, so as to deform together with the impermeable layer 32 without, however, tearing as a result of the increased pressure in the ingredient compartment when pressurized hot water is introduced into the capsule 10, and to serve also as a filter means.

The capsule 10 further comprises a filter element 36 configured to filter the beverage before the latter flows out of the capsule through the outlet opening 20, thus preventing the product granules from passing through the retaining wall 22 together with the beverage as a result of the tearing of the impermeable layer 32. The filter element 36 is formed for example by a layer of filter paper. In the embodiment shown in Figures 1 to 3, the filter element 36 is arranged above the support disc 34, firmly connected to the latter.

Alternatively, the filter element 36 may be arranged below the support disc 34 (in contact with or at a certain distance from the same) or above the impermeable layer 32.

Preferably, the cup-shaped body 12 has, in its lower area, in addition to the outlet opening 20, a lateral hole 38 (Figure 2) adapted to put the lower compartment 28 in communication with the external environment in order to keep the pressure in that compartment equal to the external pressure and thus improve the dispensing of the beverage from the capsule.

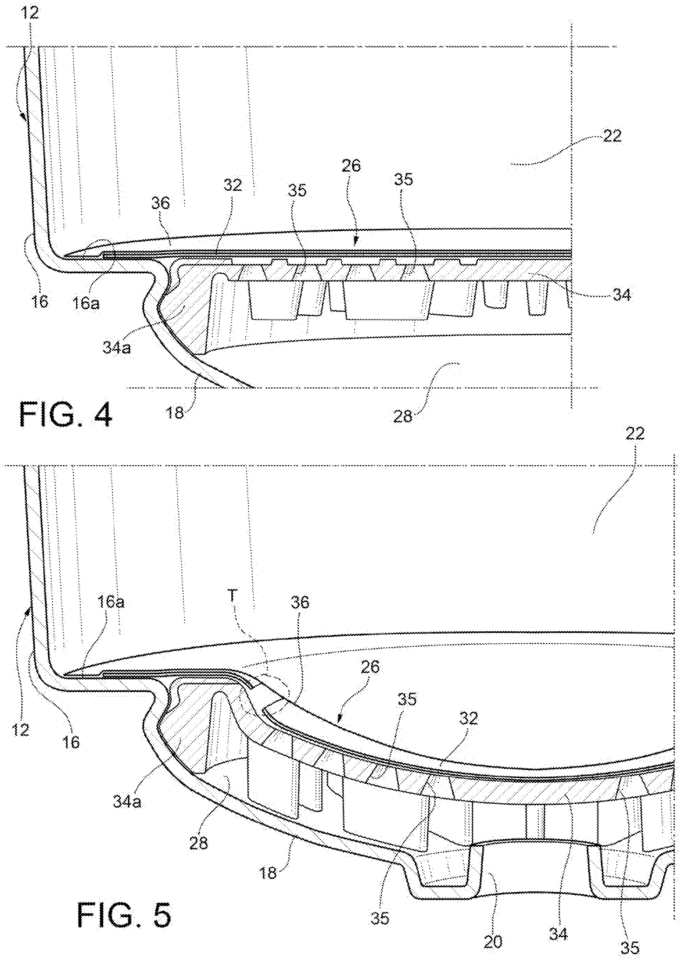

Figures 4 and 5, whein parts and elements of the capsule that are identical or corresponding to those of the capsule according to the preceding Figures have been given the same reference numbers, show a further embodiment of the capsule according to the invention. According to this embodiment, the support disc 34 rests with its peripheral edge 34a on the bottom wall 18 of the capsule. Moreover, the impermeable layer 32, preferably formed by an aluminum film, is arranged in contact with the upper face of the support disc 34 and is firmly secured, for example by welding, to the shoulder 16a of the side wall 16 of the cup-shaped body 12. The filter element 36, preferably formed by a layer of filter paper, is arranged above the impermeable layer 32. An additional filter element (not shown) may also be arranged below the impermeable layer 32 and welded to the upper face of the support disc 34. Figure 4 shows the support disc 34 and the retaining wall 26 in the initial undeformed condition, before the introduction of pressurized hot water into the capsule, while Figure 5 shows the support disc 34 and the retaining wall 26 in the deformed condition following the introduction of pressurized hot water into the capsule. As shown in Figure 5, as a result of the stress state in the impermeable layer 32 due to the deformation of this layer caused by the pressure increase in the capsule, the impermeable layer 32 tears in an area (indicated T) next to the peripheral edge 34a of the support disc 34.

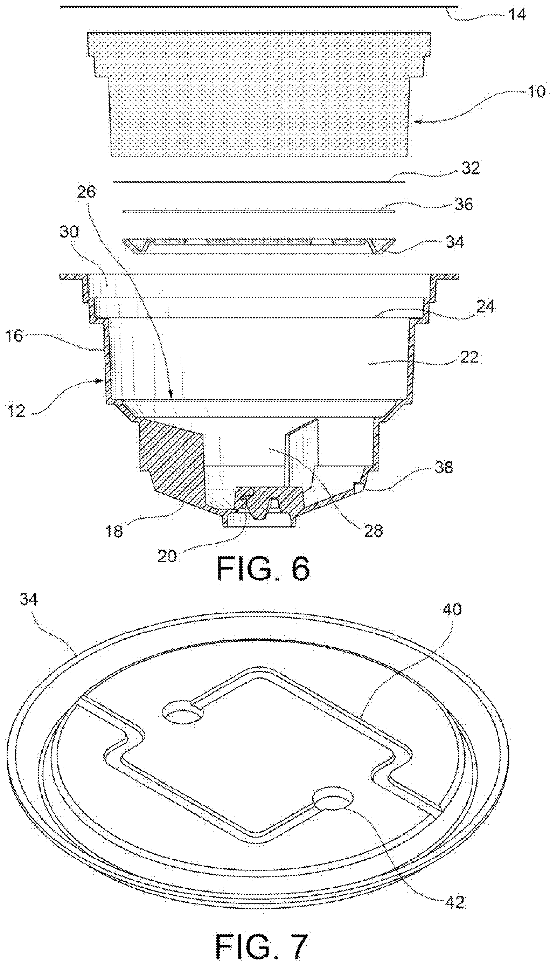

A further embodiment of the capsule is finally shown in Figures 6 and 7, where parts and elements identical or corresponding to those of the capsule shown in Figures 1 to 3 have been given the same reference numbers. This further embodiment of the capsule differs from that of Figures 1 to 3 substantially in that the support disc 34 has on its upper face one or more labyrinth grooves 40 (in the illustrated example, two grooves) each ending with a respective hole 42. Due to the presence of the labyrinth groove(s) 40, the infusion that flows out of the ingredient compartment 22 undergoes a greater effect of friction before it is dispensed from the capsule, which is preferable for certain types of beverages. Apart from that, what has been said previously with reference to the embodiment of Figures 1 to 3 also applies to this further embodiment.

The operation of the capsule 10 described above is as follows.

Pressurized hot water is introduced into the capsule 10 by means of a needle of the machine, after puncturing the lid 14. The water thus introduced into the capsule 10 passes through the upper wall 24, if present, of the ingredient compartment 22 and thus enters within such compartment, where it is mixed with the infusion product contained therein. The increase in pressure in the ingredient compartment 22 due to the introduction of pressurized water causes the retaining wall 26 to flex downwards, i.e. towards the bottom wall 18 (see Figure 5), until the impermeable layer 32 is torn. As previously mentioned, due to the fact that the support disc 34 follows the deformation of the impermeable layer 22, in that it deforms together with the support disc 34, the tearing of the impermeable layer 22 takes place in an area T next to the peripheral edge 34a of the support disc 34, rather than in a central area of this layer. The tearing of the impermeable layer 22 allows the beverage to flow out of the ingredient compartment 22 towards the lower compartment 28, and from here to flow out of the capsule through the outlet opening 20. The tearing of the impermeable layer 32 takes place in an autonomous way, solely as a result of the increase in the stress state due to the deformation caused by the pressure increase inside the ingredient compartment 22, with no need to provide, below the impermeable layer 32, perforating elements adapted to interact with such layer.

Due to the fact that the tearing of the impermeable layer 22 takes place without interaction with perforating elements, the filter element 36 remains intact, i.e. it does not tear, and therefore it is able to fully perform its filtering action, for the entire duration of the preparation process of the beverage, even in the case of an infusion product having a very fine grind, whereby the quality of the beverage obtained is significantly improved.

Naturally, the principle of the invention remaining unchanged, the embodiments and the manufacturing details may vary widely with respect to those described and illustrated purely by way of non-limiting example, without thereby departing from the scope of the invention as defined in the appended claims.

## Claims

1. Capsule (10) for infusion products, particularly for coffee, comprising a cup-shaped body (12) and a lid (14) which closes the cup-shaped body (12) superiorly,
wherein the cup-shaped body (12) comprises a side wall (16) and a bottom wall (18) having at least one outlet opening (20) for the infusion to flow out of the capsule (10), and a retaining wall (26) defining inferiorly an intermediate compartment (22) containing the infusion product, the retaining wall (26) including an impermeable layer (32), which is firmly secured at a peripheral edge thereof to the cup-shaped body (12) and is configured to tear as a result of the increase in pressure in the intermediate compartment (22) following the introduction of pressurized hot water into the capsule (10), and being also spaced from the bottom wall (18) so as to define with the latter a lower compartment (28), and
wherein the capsule (10) further comprises filtering means (36) configured to filter the infusion upstream of the outlet opening (20),
**characterized**
**in that** it further comprises a perforated and elastically defonnable support disc (34) which is arranged beneath the impermeable layer (32), with a peripheral edge (34a) thereof resting on the bottom wall (18) of the capsule (10) or on a support surface placed at a distance from the bottom wall (18) of the capsule (10), and is configured to deform, by flexing towards the bottom wall (18) of the capsule (10), as a result of the deformation of the impermeable layer (32) when the pressure inside the intermediate compartment (22) increases due to the introduction of pressurized hot water into the capsule (10), until the impermeable layer (32) tears as a result of its deformation.

2. Capsule according to claim 1, wherein the impermeable layer (32) is made of aluminum or plastic material.

3. Capsule according to claim 1 or claim 2, wherein the impermeable layer (32) has at least one tear point so as to tear at said at least one tear point.

4. Capsule according to any one of the preceding claims, wherein the support disc (34) has a plurality of holes (35) distributed over the entire support disc (34) or over part of it.

5. Capsule according to any one of the preceding claims, wherein the support disc (34) has, on its upper face, at least one labyrinth groove (40) ending with a hole (42).

6. Capsule according to any one of the preceding claims, wherein said filtering means (36) are placed above and/or below the impermeable layer (32).

7. Capsule according to any of claims 1 to 5, wherein said filtering means (36) are placed between the impermeable layer (32) and the support disc (34) or below the support disc (34).

8. Capsule according to claim 6 or claim 7, wherein said filtering means (36) are firmly connected to the support disc (34).

9. Capsule according to any one of the preceding claims, wherein said filtering means (36) comprise a layer of filter paper.

10. Capsule according to any one of the preceding claims, wherein the support disc (34) is made of plastic material or filter paper.

11. Capsule according to any one of the preceding claims, wherein the lid (14) is impermeable.

12. Capsule according to claim 11, further comprising an upper wall (24) superiorly defining the intermediate compartment (22), the upper wall (24) having a plurality of holes and being spaced from the lid (14) so as to define with this latter an upper compartment (30).

13. Capsule according to claim 12, wherein the upper wall (24) is formed by a microperforated film.

14. Capsule according to any one of claims from 1 to 10, wherein the lid (14) is permeable.

15. Capsule according to any one of the preceding claims, wherein the cup-shaped body (12) has in its lower area, in addition to said at least one outlet opening (20), a lateral hole (38) adapted to put the lower compartment (28) of the capsule in communication with the external environment in order to maintain the pressure in that compartment equal to the external pressure.

## Patentansprüche

1. Kapsel (10) für Aufgussprodukte, insbesondere für Kaffee, umfassend einen becherförmigen Körper (12) und einen Deckel (14), der den becherförmigen Körper (12) oben verschließt,
wobei der becherförmige Körper (12) eine Seitenwand (16) und eine Bodenwand (18) mit zumindest einer Auslassöffnung (20) zum Ausströmen des Aufgusses aus der Kapsel (10) und eine Rückhaltewand (26) umfasst, die unten eine Zwischenkammer (22) definiert, welches das Aufgussprodukt enthält, wobei die Rückhaltewand (26) eine undurchlässige Schicht (32) enthält, die an einem Umfangsrand davon fest an dem becherförmigen Körper (12) befestigt ist und dahingehend konfiguriert ist, als Folge des Druckanstiegs in der Zwischenkammer (22) nach dem Einleiten von unter Druck stehendem heißem Wasser in die Kapsel (10) zu reißen, und zudem von der Bodenwand (18) beabstandet ist, um mit letzterer eine untere Kammer (28) zu definieren, und wobei die Kapsel (10) ferner Filtermittel (36) umfasst, die konfiguriert sind, den Aufguss stromaufwärts der Auslassöffnung (20) zu filtern,
**dadurch gekennzeichnet, dass** sie ferner eine perforierte und elastisch verformbare Stütz- bzw. Trägerscheibe (34) umfasst, die unterhalb der undurchlässigen Schicht (32) angeordnet ist, wobei eine Umfangskante (34a) davon auf der Bodenwand (18) der Kapsel (10) oder auf einer in einem Abstand von der Bodenwand (18) der Kapsel (10) angeordneten Stütz- bzw. Trägerfläche aufliegt und konfiguriert ist, sich zu verformen, indem sie sich in Richtung der Bodenwand (18) der Kapsel (10) infolge der Verformung der undurchlässigen Schicht (32) biegt, wenn der Druck innerhalb der Zwischenkammer (22) aufgrund des Einleitens von unter Druck stehendem heißem in die Kapsel (10) ansteigt, bis die undurchlässige Schicht (32) infolge ihrer Verformung reißt.

2. Kapsel nach Anspruch 1, wobei die undurchlässige Schicht (32) aus Aluminium oder Kunststoff gebildet ist.

3. Kapsel nach Anspruch 1 oder Anspruch 2, wobei die undurchlässige Schicht (32) zumindest eine Reißstelle aufweist, um an der zumindest einen Reißstelle zu reißen.

4. Kapsel nach einem der vorhergehenden Ansprüche, wobei die Stützscheibe (34) eine Mehrzahl von Löchern (35) aufweist, die über die gesamte Stützscheibe (34) oder einen Teil davon verteilt sind.

5. Kapsel nach einem der vorhergehenden Ansprüche, wobei die Stützscheibe (34) auf ihrer oberen Seite zumindest eine Labyrinthnut (40) aufweist, die mit einem Loch (42) endet.

6. Kapsel nach einem der vorhergehenden Ansprüche, wobei die Filtermittel (36) über und/oder unter der undurchlässigen Schicht (32) platziert sind.

7. Kapsel nach einem der Ansprüche 1 bis 5, wobei die Filtermittel (36) zwischen der undurchlässigen Schicht (32) und der Stützscheibe (34) oder unterhalb der Stützscheibe (34) angeordnet sind.

8. Kapsel nach Anspruch 6 oder Anspruch 7, wobei die Filtermittel (36) fest mit der Stützscheibe (34) verbunden sind.

9. Kapsel nach einem der vorhergehenden Ansprüche, wobei die Filtermittel (36) eine Schicht aus Filterpapier umfassen.

10. Kapsel nach einem der vorhergehenden Ansprüche, wobei die Stützscheibe (34) aus Kunststoff oder Filterpapier gebildet ist.

11. Kapsel nach einem der vorhergehenden Ansprüche, wobei der Deckel (14) undurchlässig ist.

12. Kapsel nach Anspruch 11, ferner umfassend eine obere Wand (24), welche die Zwischenkammer (22) oben bzw. oberhalb definiert, wobei die obere Wand (24) eine Mehrzahl von Löchern aufweist und von dem Deckel (14) beabstandet ist, um mit dem letzteren eine obere Kammer (30) zu definieren.

13. Kapsel nach Anspruch 12, wobei die obere Wand (24) durch einen mikroperforierte Film gebildet ist.

14. Kapsel nach einem der Ansprüche 1 bis 10, wobei der Deckel (14) durchlässig ist.

15. Kapsel nach einem der vorhergehenden Ansprüche, wobei der becherförmige Körper (12) in seinem unteren Bereich zusätzlich zu der zumindest einen Austrittsöffnung (20) ein seitliches Loch (38) aufweist, das angepasst ist, die untere Kammer (28) der Kapsel in Verbindung mit der Außenumgebung zu versetzen, um den Druck in dieser Kammer gleich dem Außendruck zu halten.

## Revendications

1. Capsule (10) pour des infusions en particulier du café comprenant un corps (12) en forme de coupelle et un couvercle (14) fermant le dessus du corps en forme de coupelle (12),
- le corps en forme de coupelle (12) ayant une paroi latérale (16) et une paroi de fond (18) avec au moins un orifice de sortie (20) pour permettre à l'infusion de sortie de la capsule (10) et une paroi de retenue (26) formant en partie basse un compartiment intermédiaire (22) contenant l'infusion, la paroi de retenue (26) ayant une couche imperméable (32) fixée solidairement au bord périphérique du corps en forme de coupelle (12), configurée pour se déchirer sous l'effet de l'augmentation de la pression dans le compartiment intermédiaire (22) faisant suite à l'introduction d'eau chaude sous pression dans la capsule (10) et espacée de la paroi du fond (18) pour former avec celle-ci un compartiment inférieur (28) et
- la capsule (10) comporte en outre un filtre (36) configuré pour filtrer l'infusion, en amont de l'orifice de sortie (20),
capsule **caractérisée en ce qu'**elle comprend en outre
un disque de support (34) perforé, déformable élastiquement disposé sous la couche imperméable (32) et dont le bord périphérique (34a) repose sur la paroi de fond (18) de la capsule (10) ou sur une surface de support écartée de la paroi de fond (18) de la capsule (10) et configuré pour se déformer en fléchissant vers la paroi de fond (18) de la capsule (10) sous l'effet de la déformation de la couche imperméable (32) lorsque la pression dans le compartiment intermédiaire (22) augmente par l'introduction d'eau chaude sous pression dans la capsule (10) jusqu'à ce que la couche imperméable (32) se déchire par suite de sa déformation.

2. Capsule selon la revendication 1,
selon laquelle
la couche imperméable (32) est en aluminium ou en plastique.

3. Capsule selon la revendication 1 ou 2,
selon laquelle
la couche imperméable (32) a au moins un point de rupture pour se déchirer en au moins un point.

4. Capsule selon l'une des revendications précédentes,
dans laquelle
le disque de support (34) comporte un ensemble d'orifices (35) répartis sur tout le disque de support (34) ou une partie de celui-ci.

5. Capsule selon l'une des revendications précédentes,
selon laquelle
le disque de support (34) présente sur son côté supérieur, au moins une rainure en forme de labyrinthe (40) se terminant par un orifice (42).

6. Capsule selon l'une des revendications précédentes,
selon laquelle
le filtre (36) est placé au-dessus et/ou en dessous de la couche imperméable (32).

7. Capsule selon l'une des revendications 1 à 5,
selon laquelle
le filtre (36) est placé entre la couche imperméable (32) et le disque de support (34) ou en dessous du disque de support (34).

8. Capsule selon l'une des revendications 6 ou 7,
dans laquelle
le filtre (36) est relié solidairement au disque de support (34).

9. Capsule selon l'une des revendications précédentes,
dans laquelle
le filtre (36) est une couche de papier filtre.

10. Capsule selon l'une des revendications précédentes,
selon laquelle
le disque de support (34) est en matière plastique ou papier filtre.

11. Capsule selon l'une des revendications précédentes,
dans laquelle
le couvercle (14) est imperméable.

12. Capsule selon la revendication 11,
**caractérisée en ce qu'**elle comprend en outre une paroi supérieure (24) définissant le compartiment intermédiaire (22), la paroi supérieure (24) ayant un ensemble d'orifices espacés du couvercle (14) de façon à définir avec celui-ci un compartiment supérieur (30).

13. Capsule selon la revendication 12,
selon laquelle
la paroi supérieure (24) est un film microperforé.

14. Capsule selon l'une des revendications 1 à 10,
dans laquelle
le couvercle (14) est perméable.

15. Capsule selon l'une des revendications précédentes,
dans laquelle
le corps (12) en forme de coupelle a une zone inférieure avec en plus au moins un orifice de sortie (20), un orifice latéral (38) pour faire communiquer le compartiment inférieur (28) de la capsule avec l'environnement extérieur pour maintenir la pression dans le compartiment, égal à la pression extérieure.
